# EUROPÄISCHE PATENTSCHRIFT

(11) **EP 3 217 056 B1**
(45) Veröffentlichungstag und Bekanntmachung des Hinweises auf die Patenterteilung: **24.04.2019**
(21) Anmeldenummer: 17160018.2
(22) Anmeldetag: 09.03.2017
(51) Int. Cl.: F16K 31/50, F16L 41/06, F16L 47/34

(54) **VENTILANBOHRARMATUR**
VALVE BORING FITTING
ROBINET AUTO-PERCEUR À SOUPAPE

(30) Priorität: 11.03.2016 DE 102016204013
(43) Veröffentlichungstag der Anmeldung: 13.09.2017
(73) Patentinhaber: agru Kunststofftechnik Gesellschaft m.b.H., 4540 Bad Hall (AT)
(72) Erfinder: BERNING, Joachim, 4522 Sierning (AT); KERSCHBAUMMAYR, Thomas, 4595 Waldneukirchen (AT); ORTMAIER, Markus, 4055 Pucking (AT)
(74) Vertreter: Burger, Hannes

(56) Entgegenhaltungen:
- DE-A1- 2 505 098
- DE-A1- 19 801 851
- DE-A1-102008 058 339
- FR-A- 1 377 703

## Beschreibung

Die Erfindung betrifft eine Ventilanbohrarmatur, wie dies im Anspruch 1 angegeben ist.

Aus der DE 103 20 997 B4 ist eine Ventilanbohrarmatur mit einem Gehäuse, einem auf einer Rohrleitung befestigbaren Sattel, einem Abzweigstutzen, einem Ventilkörper, welcher mit einem Außengewinde versehen ist, wobei das Außengewinde mit dem Gehäuse in Eingriff steht, und einem Schneidwerkzeug bekannt. Der Ventilkörper und das Schneidwerkzeug sind im Gehäuse über eine Antriebsspindel längsverschiebbar angeordnet. Die Antriebsspindel besteht aus einem aus dem Gehäuse herausgeführten Schaft und einer am gehäuseinneren Ende des Schafts angeordneten Hülse. Die Hülse ist zum Schaft und zum Ventilkörper so axial verschiebbar angeordnet, dass in einer oberen Endlage des Schneidwerkzeuges die Hülse nahezu vollständig im Ventilkörper aufnehmbar ist und gleichzeitig vollständig über den starren Teil des Schaftes gestülpt ist. Die Drehmomentenübertragung zwischen Schaft und Hülse, sowie zwischen Hülse und Ventilkörper erfolgt hierbei über eine zumindest bereichsweise polygonale Umfangskontur der jeweiligen Bauteile. Durch die Hülse ergibt sich eine teleskopierbare Antriebsspindel zur Drehmomentübertragung.

Die DE 198 01 851 A1 offenbart eine Ventilanbohrarmatur mit einem Gehäuse und einem im Gehäuse aufgenommenen Ventilkörper, wobei der Ventilkörper ein Außengewinde aufweist, mittels welchem er in Axialrichtung verschiebbar im Gehäuse aufgenommen ist. Außerdem ist im Gehäuse ein Sicherungsring aufgenommen, welcher in das Gehäuse eingeschraubt ist und dazu dient, um den Ventilkörper im Gehäuse zu sichern.

Weitere Ventilanbohrarmaturen sind aus der DE 10 2008 058339 A1, der FR 1 377 703 A und der DE 25 05 098 A bekannt.

Weiters sind aus dem Stand der Technik unzählige Ausführungen bekannt, in denen eine Antriebsspindel mit einer polygonalen Querschnittskontur, beziehungsweise mit einem Mitnehmerelement, eine direkte drehmomentübertragende Verbindung zu einem Ventilkörper bildet, in welchem eine entsprechende Ausnehmung zur Aufnahme des Drehmomentes vorgesehen ist. Auch in diesen Ausführungen ist der Ventilkörper relativ zur Antriebsspindel verschiebbar.

Die in der DE 103 20 997 B4 beschriebene Ausführung besitzt den Nachteil, dass der Aufbau der Antriebsspindel mit einer zwischengeschalteten Hülse komplex ist. Dadurch ergeben sich hohe Anforderungen an die Fertigung der zahlreichen Kleinteile. Auch der Zusammenbau der Ventilanbohrarmatur gestaltet sich aufgrund der Kleinteile als schwierig. Dadurch ist diese Ventilanbohrarmatur nicht nur relativ teuer in der Herstellung, sondern besteht aufgrund der vielen Kleinteile auch eine gewisse Fehleranfälligkeit im Hinblick auf die typischerweise langjährige Einsatz- bzw. Nutzungsdauer solcher Anbohrarmaturen.

Die weiteren aus dem Stand der Technik bekannten Ausführungen besitzen den Nachteil, dass der Ventilkörper eine große axiale Erstreckung aufweisen muss, um eine ausreichende Öffnungsstellung zum freien bzw. ungehinderten Durchfluss eines Mediums bewerkstelligen zu können. Dadurch ist die Bauhöhe einer derartigen Ventilanbohrarmatur unerwünscht groß.

Der vorliegenden Erfindung liegt die Aufgabe zugrunde, eine verbesserte Ventilanbohrarmatur zu schaffen.

Diese Aufgabe der Erfindung wird durch die Maßnahmen gemäß Anspruch 1 gelöst.

Erfindungsgemäß ist eine Ventilanbohrarmatur zum Anbringen auf einem Rohr ausgebildet. Die Ventilanbohrarmatur umfasst ein Gehäuse, das einen Hauptabschnitt mit einem Kopfbereich und einem Rohrmontagebereich, sowie einen Abzweigungsabschnitt für ein aus dem angebohrten Rohr austretendes Medium aufweist. Weiters umfasst die Ventilanbohrarmatur einen Ventilkörper mit einem Schneidwerkzeug, wobei der Ventilkörper mittels einem am Ventilkörper angebrachten und mit dem Gehäuse in Eingriff stehenden Außengewinde in Axialrichtung verschiebbar im Hauptabschnitt des Gehäuses angeordnet ist, wobei der Ventilkörper eine Drehmomenteinleitungsstelle aufweist mittels welcher er zur Einleitung einer Drehbewegung mit einem Drehwerkzeug koppelbar ist. Weiters ist ein Sicherungselement ausgebildet, welches im Kopfbereich des Hauptabschnittes des Gehäuses angeordnet ist und als mechanischer Anschlag für den Ventilkörper ausgebildet ist, um ein Herausdrehen des Ventilkörpers zu unterbinden.

Die erfindungsgemäße Ausbildung der Ventilanbohrarmatur weist den Vorteil auf, dass durch das Sicherungselement gewährleistet werden kann, dass der Ventilkörper nicht unbeabsichtigt aus dem Hauptabschnitt des Gehäuses herausgedreht werden kann. Dadurch kann die Betriebssicherheit der Ventilanbohrarmatur erhöht werden, da ein unbeabsichtigtes Herausdrehen des Ventilkörpers aus dem Gehäuse zur Folge haben würde, dass das in dem Rohr geführte Fluid unkontrolliert ausströmen könnte.

Weiters ist vorgesehen, dass das Sicherungselement als Einschraubelement ausgebildet ist, welches ein Außengewinde aufweist, insbesondere dass das Außengewinde des Ventilkörpers eine zum Außengewinde des Sicherungselementes gegensinnige Drehrichtung aufweist. Von Vorteil ist hierbei, dass das Sicherungselement mittels einer Gewindeverschraubung einfach in das Gehäuse eingeschraubt werden kann. Insbesondere bei der Verwendung von zwei Gewinden mit gegensinniger Drehrichtung kann erreicht werden, dass das Sicherungselement beim aufdrehen des Ventilkörpers nicht ungewollt mitgenommen und ebenfalls aufgedreht wird. Wenn der Ventilkörper soweit aufgedreht wird, dass er am Sicherungselement anliegt, so wird aufgrund der Reibung zwischen Ventilkörper und Sicherungselement ein Drehmoment vom Ventilkörper in das Sicherungselement eingeleitet. Bei zwei Gewinden mit gleichsinniger Drehrichtung würde dies dazu führen, dass das Sicherungselement vom Ventilkörper mitgenommen wird und dadurch ungewollt aus seiner Position herausgedreht wird. Bei Gewinden mit gegensinniger Drehrichtung wird das Sicherungselement jedoch in seine Sicherungsposition hineingedreht und somit geschlossen.

Ferner kann vorgesehen sein, dass das Außengewinde des Ventilkörpers als Rechtsgewinde ausgebildet ist und dass das Außengewinde des Sicherungselementes als Linksgewinde ausgebildet ist. Von Vorteil ist hierbei, dass durch diese Maßnahme erreicht werden kann, dass der Ventilkörper in gewohnter Drehrichtung geöffnet bzw. geschlossen werden kann.

Darüber hinaus kann vorgesehen sein, dass im Sicherungselement eine Durchgangsbohrung ausgebildet ist, und dass am Ventilkörper ein Dichtring angeordnet ist, welcher zusammen mit der Durchgangsbohrung eine Dichtanordnung bildet. Von Vorteil ist hierbei, dass das Sicherungselement gleichzeitig zur Abdichtung der Ventilanbohrarmatur dienen kann, wobei die Durchgangsbohrung im Sicherungselement einfach und vor allem mit hoher Genauigkeit hergestellt werden kann, um eine ausreichend gute Oberfläche für eine Dichtfläche zu erhalten.

Vorteilhaft ist auch eine Ausprägung, gemäß welcher vorgesehen sein kann, dass ein Durchmesser des Ventilkörpers im Bereich des Dichtringes kleiner bemessen ist als ein Durchmesser des Ventilkörpers im Bereich des Außengewindes. Dadurch kann erreicht werden, dass vom Sicherungselemente eine Abstufung ausgebildet wird, welche als Anschlag für den Ventilkörper dient.

Gemäß einer Weiterbildung ist es möglich, dass am Ventilkörper ein Abstand vom Dichtring zum Schneidwerkzeug größer ist, als ein Abstand vom Außengewinde zum Schneidwerkzeug.

Von Vorteil ist hierbei, dass durch diese Maßnahme der Dichtring mit dem Sicherungselement zusammenwirken kann.

Ferner kann es zweckmäßig sein, wenn das Schneidwerkzeug als Insert ausgebildet ist, welches stoff- und/oder formschlüssig mit dem Ventilkörper verbunden ist. Von Vorteil ist hierbei, dass das Schneidwerkzeug aus einem ersten Werkstoff sein kann und der restliche Ventilkörper aus einem zweiten Werkstoff sein kann, wobei der erste Werkstoff des Schneidwerkzeuges eine größere Festigkeit aufweisen kann, als der zweite Werkstoff des Ventilkörpers. Insbesondere kann durch diese Materialpaarung erreicht werden, dass das Schneidwerkzeug robust ausgeführt sein kann, um das Rohr aufschneiden zu können und der Rest des Ventilkörpers aus einem Werkstoff bestehen kann, welcher einfach und kostengünstig hergestellt bzw. verarbeitet werden kann.

Darüber hinaus kann vorgesehen sein, dass die Drehmomenteinleitungsstelle direkt am Insert ausgebildet ist. Von Vorteil ist hierbei, dass bei einer derartigen Ausführung die Drehmomenteinleitungsstelle an jenem Körper ist, welcher die höhere Festigkeit aufweist. Dadurch wird ein übermäßiger mechanischer Verschleiß bzw. die Bruchgefahr der Drehmomenteinleitungsstelle möglichst vermieden.

Weiters kann vorgesehen sein, dass die Drehmomenteinleitungsstelle in Form eines Innensechskantes ausgebildet ist. Von Vorteil ist hierbei, dass ein Innensechskant leicht durch das Sicherungselement hindurch zum Ventilkörper geführt werden kann, wobei ein Innensechskant ein gängiges Werkzeug ist, welches zur Grundausstattung einer jeden Installationsfachkraft gehört.

Gemäß einer besonderen Ausprägung ist es möglich, dass im Kopfbereich des Hauptabschnittes des Gehäuses eine Abstufung ausgebildet ist, welche als Anschlag für das Sicherungselement dient. Von Vorteil ist hierbei, dass durch eine derartige Abstufung die Einbautiefe des Sicherungselementes im Gehäuse vorbestimmt werden kann, und somit die Position des Sicherungselementes durch geometrische Gegebenheiten festgelegt wird.

Ein Klebstoff im Sinne dieses Dokumentes ist ein nichtmetallischer Werkstoff, der Fügeteile durch Adhäsion und Kohäsion verbinden kann. Der Klebstoff kann gleichzeitig eine abdichtende Wirkung haben.

Zum besseren Verständnis der Erfindung wird diese anhand der nachfolgenden Figuren näher erläutert.

Es zeigen jeweils in stark vereinfachter, schematischer Darstellung:
- Fig. 1: ein Ausführungsbeispiel einer Ventilanbohrarmatur in einer perspektivischen Darstellung;
- Fig. 2: ein Ausführungsbeispiel einer Ventilanbohrarmatur in einer Schnittdarstellung gemäß der Schnittlinie II-II aus Fig. 1, wobei ein Sicherungselement mit einem zum Ventilkörper gegensinnigen Gewinde im ausgebildet ist;
- Fig. 3: ein Ausführungsbeispiel einer Ventilanbohrarmatur in einer Schnittdarstellung gemäß der Schnittlinie II-II aus Fig. 1, wobei ein Sicherungselement mit einem zum Ventilkörper gleichen Gewinde ausgebildet ist;
- Fig. 4: ein Ausführungsbeispiel einer Ventilanbohrarmatur in einer Schnittdarstellung gemäß der Schnittlinie II-II aus Fig. 1, wobei ein Sicherungselement ohne Gewinde ausgebildet ist.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

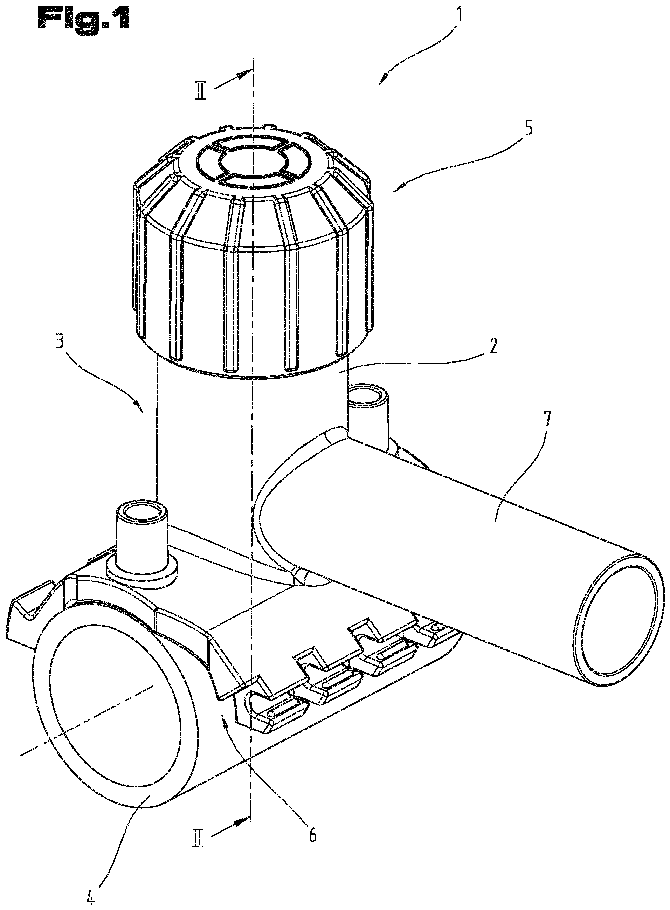

Fig. 1 zeigt eine perspektivische Ansicht eines Ausführungsbeispiels einer Ventilanbohrarmatur 1. Die in dieser Figur dargestellte Ventilanbohrarmatur 1 umfasst ein Gehäuse 2 welches einen Hauptabschnitt 3 aufweist, welcher zur Befestigung der Ventilanbohrarmatur 1 an einem anzubohrenden Rohr 4 dient. Der Hauptabschnitt 3 des Gehäuses 2 weist einen Kopfbereich 5 und einen Rohrmontagebereich 6 auf, wobei der Rohrmontagebereich 6 zum Anlegen des Gehäuses 2 am Rohr 4 vorgesehen ist. Der Rohrmontagebereich 6 des Hauptabschnittes 3 kann dabei eine schalenförmige, insbesondere halbschalenförmige Formgebung aufweisen, welche in deren Kontur an das Rohr 4 angepasst sein kann. Weiters umfasst das Gehäuse 2 einen Abzweigungsabschnitt 7, an welchem eine Rohrleitung, welche zum Hausanschluss führen kann, befestigt werden kann. Der Abzweigungsabschnitt 7 dient dazu, um ein im Rohr 4 geführtes Medium durch die den Hauptabschnitt 3 und über den damit strömungsverbundenen Abzweigungsabschnitt 7 in einen Hausanschluss einleiten zu können.

Insbesondere kann vorgesehen sein, dass der Abzweigungsabschnitt 7, wie dargestellt in einem Winkel von 90° auf den Hauptabschnitt 3 angebracht ist, bzw. mit anderen Worten ausgedrückt, dass eine Längsachse des Abzweigungsabschnittes 7 im rechten Winkel auf eine Längsachse des Hauptabschnittes 3 steht.

In einem weiteren, nicht dargestellten Ausführungsbeispiel kann auch vorgesehen sein, dass der Abzweigungsabschnitt 7 in einem beliebigen Winkel zum Hauptabschnitt 3 angeordnet ist.

Der Hauptabschnitt 3 der Ventilanbohrarmatur 1 ist vorzugsweise so ausgebildet, dass dieser mittels einer einfachen Verbindung, wie etwa eine Schraubverbindung, mittels einer Rohrschelle am anzubohrenden Rohr 4 befestigt werden kann. Es kann jedoch auch vorgesehen sein, dass der Hauptabschnitt 3 mittels einer stofflichen Verbindung, etwa einer Schweißverbindung, am anzubohrenden Rohr 4 befestigt wird. Weiters kann vorgesehen sein, dass im Rohrmontagebereich 6 des Hauptabschnittes 3 ein Heizdraht verlegt ist, mittels welchem der Rohrmontagebereich 6 unter Zuführung von Strom zumindest teilweise aufgeschmolzen werden kann und dadurch eine stoffschlüssige Verbindung zwischen Gehäuse 2 und Rohr 4 geschaffen werden kann.

Weiters kann ein Gehäusedeckel 8 vorgesehen sein, welcher auf den Kopfbereich 5 des Hauptabschnittes 3 des Gehäuses 2 aufgeschraubt sein kann, um ein unerwünschtes Eintreten von Fremdkörpern in das Innere des Gehäuses 2 zu unterbinden.

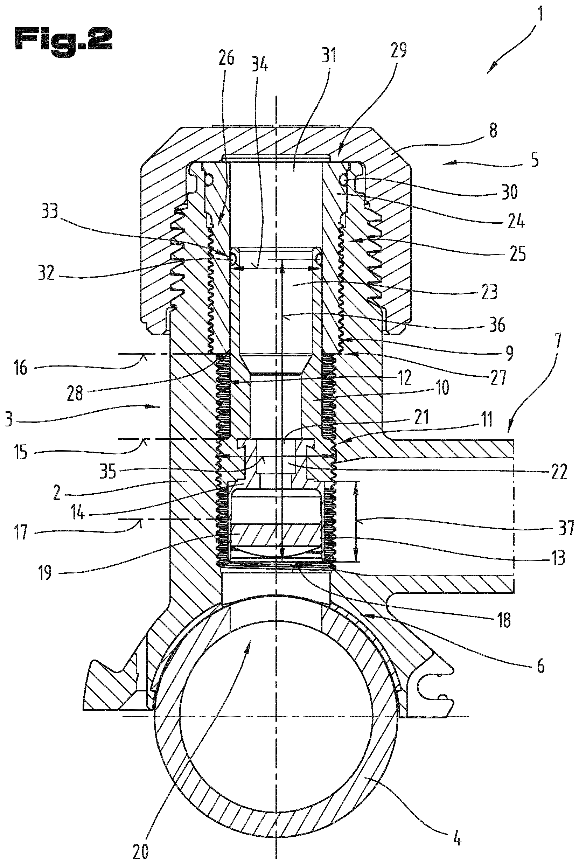

Fig. 2 zeigt einen Schnitt durch eine Ventilanbohrarmatur 1 gemäß den Schnittlinien II-II in Fig. 1.

Im Hauptabschnitt 3 des Gehäuses 2 ist ein Hohlraum 9 ausgebildet, in welchem ein Ventilkörper 10 aufgenommen ist. Der Hohlraum 9 kann in Form einer Längsbohrung ausgebildet sein, welche sich ausgehend vom Kopfbereich 5 bis zum Rohrmontagebereich 6 erstrecken kann. Insbesondere ist vorgesehen, dass der Ventilkörper 10 ein Außengewinde 11 aufweist, welches mit einem im Hohlraum 9 des Gehäuses 2 ausgebildeten Innengewinde 12 zusammenwirkt. Insbesondere kann vorgesehen sein, dass der Ventilkörper 10 mittels dem am Ventilkörper 10 ausgebildeten und mit dem Innengewinde 12 des Gehäuses 2 in Eingriff stehenden Außengewinde 11 in Axialrichtung verschiebbar im Hauptabschnitt 3 des Gehäuses 2 angeordnet ist. Insbesondere kann mittels der Gewindeverbindung eine Verschiebung des Ventilkörpers 10 in axialer Richtung durch Einleiten einer Drehbewegung in den Ventilkörper 10 erreicht werden. Vorzugsweise kann vorgesehen sein, dass der Ventilkörper 10 ausgehend von der Seite des Kopfbereiches 5 in den Hohlraum 9 eingesetzt werden kann.

Der im Gehäuse 2 eingeschraubte Ventilkörper 10 kann ein Schneidwerkzeug 13 aufweisen, welches zum Anbohren des Rohres 4 dient. Beim Anbohren des Rohres wird das Schneidwerkzeug 13 auf das Rohr 4 angedrückt und vom Schneidwerkzeug 13 ein kreisförmiger Teilabschnitt des Rohrmantels herausgetrennt. Dieser kreisförmig aus dem Rohrmantel herausgeschnittene Teilabschnitt verbleibt dabei bevorzugt im Inneren des hohlzylindrischen Schneidwerkzeuges 13. Zur sicheren Halterung des ausgeschnittenen Teilabschnittes können an der Innenmantelfläche des Schneidwerkzeuges 13 rillenartige bzw. gewindeförmige Erhebungen ausgebildet sein.

Wie aus Figur 2 ersichtlich kann vorgesehen sein, dass das Schneidwerkzeug 13 als Insert 14 ausgebildet ist, welches im Ventilkörper 10 aufgenommen ist. Das Insert 14 kann beispielsweise durch eine formschlüssige Verbindung oder durch eine stoffschlüssige Verbindung im Ventilkörper 10 aufgenommen sein. Insbesondere kann vorgesehen sein, dass das Insert 14 respektive das Schneidwerkzeug 13 aus einem ersten Werkstoff gebildet sein kann und der restliche Ventilkörper 10 aus einem zweiten Werkstoff gebildet sein kann, wobei der erste Werkstoff des Inserts 14 eine größere Festigkeit aufweisen kann, als der zweite Werkstoff des Ventilkörpers 10. Beispielsweise ist es denkbar, dass das Insert 14 aus einem metallischen Werkstoff, wie etwa Messing, Kupfer, oder auch Stahl, insbesondere einem nicht rostenden Stahl gefertigt ist. Der Ventilkörper 10 kann beispielsweise aus einem Kunststoffmaterial, wie etwa einem thermoplastischen Kunststoff, bevorzugt Polyethylen gefertigt sein.

In einer weiteren, nicht dargestellten Ausführungsvariante kann vorgesehen sein, dass der Ventilkörper 10 einteilig aus einem homogenen Werkstoff ausgebildet ist und das Schneidwerkzeug 13 daher direkt im Ventilkörper 10 ausgebildet ist.

In der Figur 2 ist die Ventilanbohrarmatur 1 ist in einer Stellung dargestellt, in der sich der Ventilkörper 10 mit dem daran angebrachten Schneidwerkzeug 13 in einer mittleren Lage 15 zwischen Offenstellung und Geschlossenstellung der Ventilanbohrarmatur 1 befindet.

Wird der Ventilkörper 10 nach dem Montieren der Ventilanbohrarmatur 1 am anzubohrenden Rohr 4 zum ersten Mal aus einer oberen Endlage 16, auch Offenstellung, in eine untere Endlage 17, auch Geschlossenstellung, bewegt, so schneidet eine Schneidkante 18 des Schneidwerkzeuges 13 einen Pfropfen 19 aus dem anzubohrenden Rohr 4. Dieser Pfropfen 19 wird innerhalb des Schneidwerkzeuges 13 aufgenommen. Gleichzeitig ist, wenn sich der Ventilkörper 10 in der unteren Endlage 17 befindet, die Strömungsverbindung vom Rohr in den Abzweigungsabschnitt 7 bzw. zum Hausanschluss unterbrochen und abgedichtet.

Beim Verstellen des Ventilkörpers 10 von der unteren Endlage 17 in die obere Endlage 16, was durch Drehen des Ventilkörpers 10 bewerkstelligt wird, wird das im anzubohrenden Rohr 4 hergestellte Loch 20 zur Hindurchströmung eines Mediums freigegeben. Somit ist eine Durchströmung vom Hauptabschnitt 3 zum Abzweigungsabschnitt 7, insbesondere zu einem Hauswasseranschluss, hergestellt.

Zum Einleiten eines Drehmomentes in den Ventilkörper 10 ist vorgesehen, dass dieser eine Drehmomenteinleitungsstelle 21 aufweist. Wie in Figur 2 dargestellt kann vorgesehen sein, dass die Drehmomenteinleitungsstelle 21 in Form einer Ausnehmung 22 ausgebildet ist. Insbesondere kann vorgesehen sein, dass die Drehmomenteinleitungsstelle 21 in Form eines Innensechskantes ausgebildet ist, wobei vorgesehen sein kann, dass ein Werkzeug in Form eines Inbusschlüssels zum Einleiten eines Drehmomentes in die Drehmomenteinleitungsstelle 21 dient. Im vorliegenden Beispiel ist die Drehmomenteinleitungsstelle 21 direkt im Insert 14 ausgebildet. Dabei kann vorgesehen sein, dass der Ventilkörper 10 eine Durchgangsöffnung 23 aufweist, durch welche das Werkzeug hindurchgeführt werden kann um die Drehmomenteinleitungsstelle 21 zu erreichen.

Diese Strömungsverbindung kann bei Bedarf jederzeit unterbrochen werden, indem mittels eines Werkzeuges, ein Drehmoment am Ventilkörper 10 aufgebracht wird. Dieses Drehmoment bzw. die daraus resultierende Drehbewegung wird dabei durch das am Ventilkörper 10 angebrachte Außengewinde 11 bzw. das am Gehäuse 2 angebrachte Innengewinde 12 in eine translatorische Bewegung bzw. eine Axialbewegung des Ventilkörpers 10 umgewandelt.

Wie aus Fig. 2 weiters ersichtlich, ist vorgesehen, dass ein Sicherungselement 24 ausgebildet ist, welches im Kopfbereich 5 in das Gehäuse 2, insbesondere in den Hohlraum 9 eingesetzt ist und welches dazu ausgebildet ist, um ein unerwünschtes Herausdrehen des Ventilkörpers 10 aus dem Gehäuse 2 verhindern zu können. Mit anderen Worten ausgedrückt ist das Sicherungselement 24 dazu ausgebildet um den Ventilkörper 10 im Gehäuse 2 zu sichern.

In einer bevorzugten Ausführungsvariante kann vorgesehen sein, dass das Sicherungselement 24 ein Außengewinde 25 aufweist, welches mit einem Innengewinde 26 im Gehäuse 2 korrespondiert. Insbesondere kann vorgesehen sein, dass das Außengewinde 25 des Sicherungselementes 24 eine gegensinnige Drehrichtung zum Außengewinde 11 des Ventilkörpers 10 aufweist. Weiters kann vorgesehen sein, dass das Innengewinde 26 des Gehäuses 2 im Bereich des Sicherungselementes 24 einen größeren Durchmesser aufweist als das Innengewinde 12 des Gehäuses 2, welches mit dem Ventilkörper 10 zusammenwirkt. Durch diese Maßnahme wird im Hohlraum 9 des Gehäuses 2 eine Abstufung 28 ausgebildet. Die Abstufung 27 dient als Anschlag zur Begrenzung der Einschraubtiefe des Sicherungselementes 24 dabei ist vorgesehen, dass eine Stirnseite 28 des Sicherungselementes 24 an der Abstufung 27 anliegt und somit die Position des Sicherungselementes 24 eindeutig definiert ist. Die Stirnseite 28 des Sicherungselementes 24 dient darüber hinaus auch als Anschlag für den Ventilkörper 10 um ein Herausdrehen des Ventilkörpers 10 aus dem Gehäuse 2 zu verhinden bzw. in die obere Endlage 16 des Ventilkörpers 10 zu bestimmen bzw. festzulegen.

Weiters kann vorgesehen sein, dass das Sicherungselement 24 einen Kopfbereich 29 aufweist, an welchem an der Außenseite ein Dichtring 30 angeordnet ist, welcher zur Abdichtung zwischen Sicherungselement 24 und Gehäuse 2 dient. Weiters kann vorgesehen sein, dass das Sicherungselement 24 eine Durchgangsbohrung 31 aufweist, in welcher der Ventilkörper 10 verschiebbar aufgenommen ist. Insbesondere kann vorgesehen sein, dass am Ventilkörper 10 ein Dichtring 32 angeordnet ist, welcher im Zusammenspiel mit der Durchgangsbohrung 31 des Sicherungselementes 24 eine Dichtanordnung 33 bildet. Bei dieser Dichtanordnung 33 ist es wesentlich, dass diese auf der gesamten Länge des Sicherungselementes 24 bzw. zumindest auf der Hublänge des Ventilkörpers 10 vollständig funktionstüchtig ist, sodass auch bei Verschiebung des Ventilkörpers 10 zwischen der oberen Endlage 16 und der unteren Endlage 17 die Dichtwirkung gewährleistet ist.

Weiters kann vorgesehen sein, dass ein Durchmesser 34 des Ventilkörpers im Bereich des Dichtringes 32 kleiner bemessen ist als ein Durchmesser 35 des Ventilkörpers 10 im Bereich des Außengewindes 11.

Außerdem kann vorgesehen sein, dass am Ventilkörper 10 ein Abstand 36 vom Dichtring 32 zum Schneidwerkzeug 13 größer ist als ein Abstand 37 vom Außengewinde 11 zum Schneidwerkzeug 13.

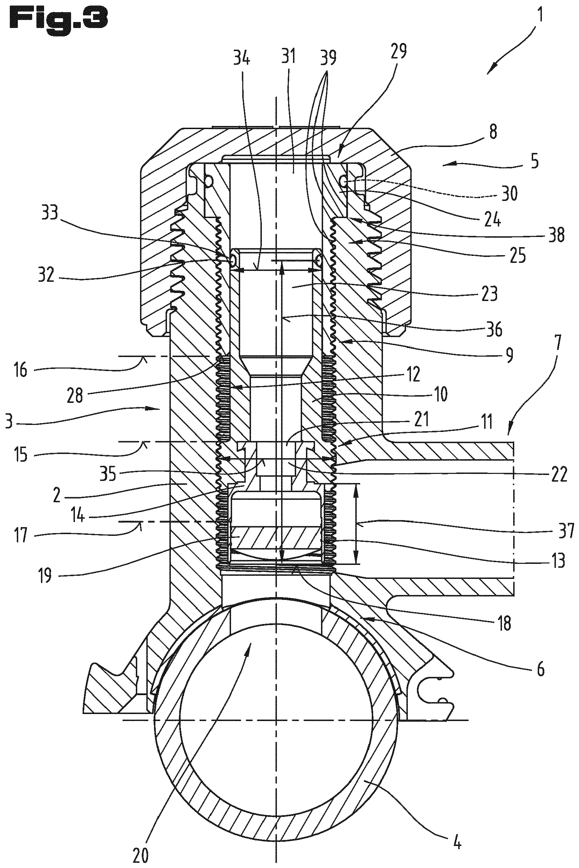

In der Fig. 3 ist eine weitere und gegebenenfalls für sich eigenständige Ausführungsform der Ventilanbohrarmatur 1 gezeigt, wobei wiederum für gleiche Teile gleiche Bezugszeichen bzw. Bauteilbezeichnungen wie in der vorangegangenen Fig. 2 verwendet werden. Um unnötige Wiederholungen zu vermeiden, wird auf die detaillierte Beschreibung in den vorangegangenen Fig. 2 hingewiesen bzw. Bezug genommen.

Das Ausführungsbeispiel der in der Fig. 3 dargestellten Ventilanbohrarmatur 1 ist ähnlich aufgebaut, wie die in der Fig. 2 dargestellte Ventilanbohrarmatur 1. Bei dieser Ausführungsvariante ist das Außengewinde 25 des Sicherungselementes 24 jedoch gleich ausgebildet wie das Außengewinde 11 des Ventilkörpers 10. Das Innengewinde 12 im Gehäuse 2 kann daher durchgängig ausgebildet sein und es braucht kein weiteres und zum Innengewinde 12 unterschiedliches Innengewinde 26 im Gehäuse 2 ausgebildet sein. Weiters kann im Kopfbereich 29 des Sicherungselementes 24 eine Abstufung 38 ausgebildet sein, welche zur Begrenzung der Einschraubtiefe des Sicherungselementes 24 dient.

Die Sicherung des Sicherungselementes 24 gegen Mitnahme durch den Ventilkörper 10 und somit gegen unerwünschtes Herausdrehen des Sicherungselementes 24 aus dem Gehäuse 2 kann mittels einem Klebstoff 39 bewerkstelligt werden, welcher im Bereich des Außengewindes 25 des Sicherungselementes 24 und/oder im Bereich der Abstufung 38 im Kopfbereich 29 des Sicherungselementes 24 eingebracht sein kann. Der Klebstoff 39 kann gleichzeitig zur Abdichtung zwischen Sicherungselement 24 und Gehäuse 2 dienen. Dadurch kann der Dichtring 30 im Kopfbereich 29 des Sicherungselementes 24 optional auch weggelassen werden.

Alternativ oder zusätzlich zur Verwendung eines Klebstoffes 39 kann vorgesehen sein, dass das Sicherungselementes 24 gegen Mitnahme durch den Ventilkörper 10 und somit gegen unerwünschtes Herausdrehen des Sicherungselementes 24 aus dem Gehäuse 2 dadurch gesichert wird, dass zwischen Kopfbereich 29 des Sicherungselementes 24 und Gehäuse 2 eine Presspassung ausgebildet ist.

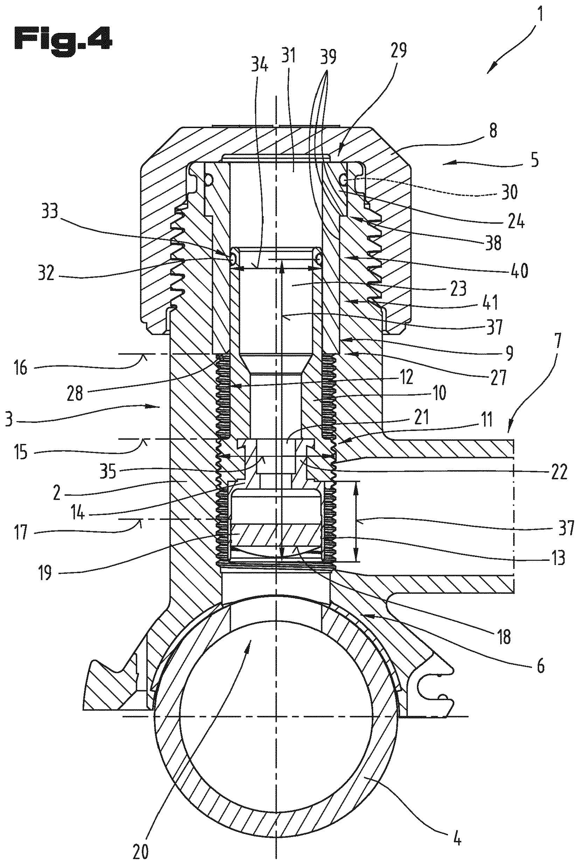

In der Fig. 4 ist eine weitere und gegebenenfalls für sich eigenständige Ausführungsform der Ventilanbohrarmatur 1 gezeigt, wobei wiederum für gleiche Teile gleiche Bezugszeichen bzw. Bauteilbezeichnungen wie in der vorangegangenen Fig. 2 verwendet werden. Um unnötige Wiederholungen zu vermeiden, wird auf die detaillierte Beschreibung in den vorangegangenen Fig. 2 hingewiesen bzw. Bezug genommen.

Das Ausführungsbeispiel der in der Fig. 4 dargestellten Ventilanbohrarmatur 1 ist ähnlich aufgebaut, wie die in der Fig. 2 dargestellte Ventilanbohrarmatur 1. Bei dieser Ausführungsvariante weist das Sicherungselementes 24 jedoch kein Außengewinde 25 auf. In diesem Ausführungsbeispiel ist vorgesehen, dass das Sicherungselement 24 mittels Klebstoff 39 in das Gehäuse 2 eingeklebt ist und/oder dass das Sicherungselement 24 mittels einer Presspassung im Gehäuse aufgenommen ist. Der Klebstoff 39 kann wahlweise an verschiedenen Stellen zwischen Sicherungselement 24 und Gehäuse 2 eingebracht sein. Der Klebstoff 39 kann gleichzeitig zur Abdichtung zwischen Sicherungselement 24 und Gehäuse 2 dienen. Dadurch kann der Dichtring 30 im Kopfbereich 29 des Sicherungselementes 24 optional auch weggelassen werden.

Weiters kann vorgesehen sein, dass das Sicherungselement 24 neben dem Kopfbereich 29 einen Schaftbereich 40 aufweist. Das Sicherungselement 24 kann beispielsweise durch axiales Einpressen in das Gehäuse 2 eingesetzt werden.

Weiters kann zwischen Kopfbereich 29 des Sicherungselementes 24 und Schaftbereich 40 eine Abstufung 38 ausgebildet sein, welche zur Begrenzung der Einpresstiefe des Sicherungselementes 24 dient.

Außerdem kann vorgesehen sein, dass im Gehäuse 2 ein Sicherungselementaufnahmebereich 41 ausgebildet ist, welcher zur Aufnahme des Schaftbereiches 40 des Sicherungselementes 24 ausgebildet ist und mit diesem korrespondiert. Der Sicherungselementaufnahmebereich 41 kann einen größeren Durchmesser aufweisen als das Innengewinde 12 im Gehäuse 2, welches zur Aufnahme des Ventilkörpers 10 dient.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

| | | | |
|---|---|---|---|
| 1 | Ventilanbohrarmatur | 30 | Dichtring Sicherungselement |
| 2 | Gehäuse | 31 | Durchgangsbohrung |
| 3 | Hauptabschnitt | 32 | Dichtring Ventilkörper |
| 4 | Rohr | 33 | Dichtanordnung |
| 5 | Kopfbereich | 34 | Durchmesser Dichtring |
| 6 | Rohrmontagebereich | 35 | Durchmesser Außengewinde |
| 7 | Abzweigungsabschnitt | 36 | Abstand Dichtring-Schneidwerkzeug |
| 8 | Gehäusedeckel | | |
| 9 | Hohlraum | 37 | Abstand Außengewinde-Schneidwerkzeug |
| 10 | Ventilkörper | | |
| 11 | Außengewinde Ventilkörper | 38 | Abstufung Kopfbereich |
| 12 | Innengewinde Gehäuse | 39 | Klebstoff |
| 13 | Schneidwerkzeug | 40 | Schaftbereich |
| 14 | Insert | 41 | Sicherungselement-aufnahmebereich |
| 15 | mittlere Lage | | |
| 16 | obere Endlage | | |
| 17 | untere Endlage | | |
| 18 | Schneidkante | | |
| 19 | Pfropfen | | |
| 20 | Loch | | |
| 21 | Drehmomenteinleitungsstelle | | |
| 22 | Ausnehmung | | |
| 23 | Durchgangsöffnung | | |
| 24 | Sicherungselement | | |
| 25 | Außengewinde Sicherungselement | | |
| 26 | Innengewinde Gehäuse Sicherungselement | | |
| 27 | Abstufung | | |
| 28 | Stirnseite Sicherungselement | | |
| 29 | Kopfbereich Sicherungselement | | |

## Patentansprüche

1. Ventilanbohrarmatur (1) zum Anbringen auf einem Rohr (4), die Ventilanbohrarmatur (1) umfassend:
ein Gehäuse (2), das einen Hauptabschnitt (3) mit einem Kopfbereich (5) und einem Rohrmontagebereich (6), sowie einen Abzweigungsabschnitt (7) für ein aus dem angebohrten Rohr (4) austretendes Medium aufweist;
einen Ventilkörper (10) mit einem Schneidwerkzeug (13), wobei der Ventilkörper (10) mittels einem am Ventilkörper (10) angebrachten und mit dem Gehäuse (2) in Eingriff stehenden Außengewinde (11) in Axialrichtung verschiebbar im Hauptabschnitt (3) des Gehäuses (2) angeordnet ist, wobei der Ventilkörper (10) eine Drehmomenteinleitungsstelle (21) aufweist mittels welcher er zur Einleitung einer Drehbewegung mit einem Drehwerkzeug koppelbar ist,
wobei ein Sicherungselement (24) ausgebildet ist, welches im Kopfbereich (5) des Hauptabschnittes (3) des Gehäuses (2) angeordnet ist und als mechanischer Anschlag für den Ventilkörper (10) ausgebildet ist, um ein Herausdrehen des Ventilkörpers (10) aus dem Gehäuse (2) zu unterbinden,
wobei das Sicherungselement (24) als Einschraubelement ausgebildet ist, welches ein Außengewinde (25) aufweist, **dadurch gekennzeichnet, dass** das Außengewinde (11) des Ventilkörpers (10) eine zum Außengewinde (25) des Sicherungselementes (24) gegensinnige Drehrichtung aufweist.

2. Ventilanbohrarmatur nach Anspruch 1, **dadurch gekennzeichnet, dass** das Außengewinde (11) des Ventilkörpers (10) als Rechtsgewinde ausgebildet ist und dass das Außengewinde (25) des Sicherungselementes (24) als Linksgewinde ausgebildet ist.

3. Ventilanbohrarmatur nach einem der vorhergehenden Ansprüche, **dadurch gekennzeichnet, dass** im Sicherungselement (24) eine Durchgangsbohrung (31) ausgebildet ist, und dass am Ventilkörper (10) ein Dichtring (32) angeordnet ist, welcher zusammen mit der Durchgangsbohrung (31) eine Dichtanordnung (33) bildet.

4. Ventilanbohrarmatur nach Anspruch 3, **dadurch gekennzeichnet, dass** ein Durchmesser (34) des Ventilkörpers (10) im Bereich des Dichtringes (32) kleiner bemessen ist als ein Durchmesser (35) des Ventilkörpers (10) im Bereich des Außengewindes (11).

5. Ventilanbohrarmatur nach Anspruch 3 oder 4, **dadurch gekennzeichnet, dass** am Ventilkörper (10) ein Abstand (36) vom Dichtring (32) zum Schneidwerkzeug (13) größer ist, als ein Abstand (37) vom Außengewinde (11) zum Schneidwerkzeug (13).

6. Ventilanbohrarmatur nach einem der vorhergehenden Ansprüche, **dadurch gekennzeichnet, dass** das Schneidwerkzeug (13) als Insert (14) ausgebildet ist, welches stoff- und/oder formschlüssig mit dem Ventilkörper (10) verbunden ist.

7. Ventilanbohrarmatur nach Anspruch 6, **dadurch gekennzeichnet, dass** die Drehmomenteinleitungsstelle (21) direkt am Insert (14) ausgebildet ist.

8. Ventilanbohrarmatur nach Anspruch 7, **dadurch gekennzeichnet, dass** die Drehmomenteinleitungsstelle (21) in Form eines Innensechskantes ausgebildet ist.

9. Ventilanbohrarmatur nach einem der vorhergehenden Ansprüche, **dadurch gekennzeichnet, dass** im Kopfbereich (5) des Hauptabschnittes (3) des Gehäuses (2) eine Abstufung (27) ausgebildet ist, welche als Anschlag für das Sicherungselement (24) dient.

## Claims

1. A valve boring fitting (1) for attachment to a pipe (4), the valve boring fitting (1) comprising:
a housing (2) which has a main section (3) with a head region (5) and a pipe mounting region (6), and a branch section (7) for a medium exiting from the bored pipe (4);
a valve body (10) with a cutting tool (13), the valve body (10) being arranged in the main section (3) of the housing (2) such that said valve body can be displaced in the axial direction by means of an external thread (11) which is applied on the valve body (10) and meshes with the housing (2), the valve body (10) having a torque introduction point (21) by means of which it can be coupled to a rotary tool to introduce a rotary movement,
a securing element (24) being formed, which is arranged in the head region (5) of the main section (3) of the housing (2) and is designed as a mechanical stop for the valve body (10) to prevent the valve body (10) rotating out of the housing (2),
the securing element (24) being in the form of a screw-in element which has an external thread (25), **characterised in that** the external thread (11) of the valve body (10) has a rotation direction opposite to the external thread (25) of the securing element (24).

2. The valve boring fitting according to claim 1, **characterised in that** the external thread (11) of the valve body (10) is in the form of a right-handed thread, and the external thread (25) of the securing element (24) is in the form of a left-handed thread.

3. The valve boring fitting according to any one of the preceding claims, **characterised in that** a through-bore (31) is formed in the securing element (24), and a sealing ring (32) is arranged on the valve body (10) and forms a sealing assembly (33) together with the through-bore (31).

4. The valve boring fitting according to claim 3, **characterised in that** a diameter (34) of the valve body (10) in the region of the sealing ring (32) is smaller than a diameter (35) of the valve body (10) in the region of the external thread (11).

5. The valve boring fitting according to claim 3 or 4, **characterised in that** on the valve body (10), a distance (36) between the sealing ring (32) and the cutting tool (13) is greater than a distance (37) between the external thread (11) and the cutting tool (13).

6. The valve boring fitting according to any one of the preceding claims, **characterised in that** the cutting tool (13) is in the form of an insert (14) which is integrally and/or interlockingly connected to the valve body (10).

7. The valve boring fitting according to claim 6, **characterised in that** the torque introduction point (21) is formed directly on the insert (14).

8. The valve boring fitting according to claim 7, **characterised in that** the torque introduction point (21) is in the form of a hexagon socket.

9. The valve boring fitting according to any one of the preceding claims, **characterised in that** in the head region (5) of the main section (3) of the housing (2) there is a shoulder (27) which acts as a stop for the securing element (24).

## Revendications

1. Armature de perçage de soupape (1) pour l'application à un tube (4), l'armature de perçage de soupape (1) comprenant :
un boîtier (2) qui comprend une portion principale (3) avec une partie de tête (5) et une partie de montage sur tube (6), ainsi qu'une portion de bifurcation (7) pour un fluide sortant du tube (4) percé ;
un corps de soupape (10) avec un outil de coupe (13), le corps de soupape (10) étant disposé de manière coulissante dans la direction axiale dans la portion principale (3) du boîtier (2) au moyen d'un filetage externe (11) réalisé sur le corps de soupape (10) et emboîté avec le boîtier (2), le corps de soupape (10) comprenant un point d'application de couple (21) au moyen duquel il peut être couplé, pour l'application d'un mouvement de rotation, avec un outil rotatif,
un élément de sécurisation (24) étant prévu, qui est disposé dans la partie de tête (5) de la portion principale (3) du boîtier (2) et qui est conçu comme une butée mécanique pour le corps de soupape (10) afin d'empêcher une rotation vers l'extérieur du corps de soupape (10) hors du boîtier (2),
l'élément de sécurisation (24) étant conçu comme un élément de vissage qui comprend un filetage externe (25), **caractérisée en ce que** le filetage externe (11) du corps de soupape (10) comprend un sens de rotation opposé au filetage externe (25) de l'élément de sécurisation (24).

2. Armature de perçage de soupape selon la revendication 1, **caractérisée en ce que** le filetage externe (11) du corps de soupape (10) est conçu comme un filetage à droite et **en ce que** le filetage externe (25) de l'élément de sécurisation (24) est conçu comme un filetage à gauche.

3. Armature de perçage de soupape selon l'une des revendications précédentes, **caractérisée en ce que**, dans l'élément de sécurisation (24), est réalisé un perçage de passage (31) et **en ce que**, sur le corps de soupape (10), est disposé une bague d'étanchéité (32) qui forme, avec le perçage de passage (31), un dispositif d'étanchéité (33).

4. Armature de perçage de soupape selon la revendication 3, **caractérisée en ce qu'**un diamètre (34) du corps de soupape (10) présente, au niveau de la bague d'étanchéité (32), une dimension inférieure à un diamètre (35) du corps de soupape (10) au niveau du filetage externe (11).

5. Armature de perçage de soupape selon la revendication 3 ou 4, **caractérisée en ce que**, sur le corps de soupape (10), une distance (36) entre la bague d'étanchéité (32) et l'outil de coupe (13) est supérieure à une distance (37) entre le filetage externe (11) et l'outil de coupe (13).

6. Armature de perçage de soupape selon l'une des revendications précédentes, **caractérisée en ce que** l'outil de coupe (13) est conçu comme un insert (14) qui est relié par liaison de matière et/ou par complémentarité de forme avec le corps de soupape (10).

7. Armature de perçage de soupape selon la revendication 6, **caractérisée en ce que** le point d'application du couple (21) est réalisé directement sur l'insert (14).

8. Armature de perçage de soupape selon la revendication 7, **caractérisée en ce que** le point d'application du couple (21) est réalisé sous la forme d'un hexagone interne.

9. Armature de perçage de soupape selon l'une des revendications précédentes, **caractérisée en ce que**, dans la partie de tête (5) de la portion principale (3) du boîtier (2), est réalisée un échelonnement (27) qui sert de butée pour l'élément de sécurisation (24).
